Europäisches Patentamt

European Patent Office

Office européen des brevets

(11) Veröffentlichungsnummer: **0 394 613**

**A2**

(12) # EUROPÄISCHE PATENTANMELDUNG

(21) Anmeldenummer: **90101175.9**

(22) Anmeldetag: **22.01.90**

(51) Int. Cl.⁵: **G03B 27/46, G03B 17/50, G03B 27/30**

(30) Priorität: **28.04.89 DE 3914066**

(43) Veröffentlichungstag der Anmeldung:
**31.10.90 Patentblatt 90/44**

(84) Benannte Vertragsstaaten:
**AT BE CH DE DK ES FR GB GR IT LI LU NL SE**

(71) Anmelder: **MICROBOX FILMDATENBANK GMBH**
**Salinenstrasse 52**
**D-5360 Bad Nauheim(DE)**

(72) Erfinder: **Welp, Ulrich**
**Steingasse 1**
**D-6350 Bad Nauheim(DE)**
Erfinder: **Kramer, Willi**
**Schlesienring 20**
**D-6368 Bad Vilbel(DE)**

(74) Vertreter: **Schlagwein, Udo, Dipl.-Ing.**
**Anwaltsbüro Ruppert & Schlagwein**
**Frankfurter Strasse 34**
**D-6350 Bad Nauheim(DE)**

(54) Filmkartenkamera, sowie Verfahren zum Erstellen und Bedrucken von Orginal- und Duplikatfilmkarten mit Silberfilm.

(57) Eine Filmkartenkamera hat ein T-förmiges Kameragehäuse (2), in dessen zu einer Säule (1) führenden, rückwärtigen Gehäusebereich (4) hintereinander vier Entwicklungsstationen (14 - 17) vorgesehen sind. Ein dort angeordneter Querförderer (12) vermag die in einer Belichtungsstation (8) belichteten Filmkarten (6) der jeweils nicht belegten Entwicklungsstation (14 - 17) zuzuführen und nach dem Entwickeln zurück zum vorderen Gehäusebereich (3) zu transportieren. Dort ist im Kameragehäuse (2) eine Kontaktbelichtungsstation (10) vorgesehen, um in der Filmkartenkamera auch Duplikatkarten anfertigen zu können. Zum Bedrucken von Duplikatkarten wird in einer Lesestation die jeweilige Karte identifiziert. Danach werden die zu druckenden Daten einem Speicher entnommen.

Die Erfindung betrifft eine Filmkartenkamera mit einem von einem Ausleger an einer senkrechten Säule gehaltenen Kameragehäuse, welche einen Filmkarteneinlaß, eine Belichtungsstation und eine Entwicklungsstation aufweist. Eine solche Filmkartenkamera ist beispielsweise in der EP-A-0 171 572 gezeigt. Weiterhin betrifft die Erfindung ein Verfahren zum Erstellen und Bedrucken von Original-und Duplikatfilmkarten mit Silberfilm.

Die bekannte Filmkartenkamera nach der EP-A-0 171 572 hat nur eine einzige Entwicklungsstation. Da das Entwickeln, Fixieren und Wässern des belichteten Films relativ viel Zeit beansprucht, arbeitet die bekannte Filmkartenkamera relativ langsam. Um rascher hintereinander Filmkarten belichten und entwickeln zu können, ist es durch die DE-PS 32 45 333 auch schon bekannt, in einer Filmkartenkamera zwei Entwicklungsstationen vorzusehen, welche abwechselnd mit belichteten Filmkarten beschickt werden. Die Entwicklungsstationen sind zu beiden Seiten der Belichtungsstation angeordnet. Dadurch wird die Filmkartenkamera relativ lang. Würde man die Filmkartenkamera um eine Duplizierstation erweitern, dann ergäbe sich eine noch größere Baulänge. Das trifft noch mehr zu, wenn man statt der zwei Entwicklungsstationen beispielsweise vier vorsehen wollte. Die sich dann ergebende große Baulänge würde zu Schwierigkeiten bei der Anordnung von Lampen zur Beleuchtung der abzulichtenden Vorlagen führen. Weiterhin würde die Filmkartenkamera durch zusätzliche Entwicklungsstationen und durch die Duplizierstation relativ schwer. Da sie üblicherweise mittels eines relativ weit ausladenden Auslegers an einer Säule höhenverfahrbar gehalten ist, müßte die Führung an der Säule ein relativ hohes Kippmoment abstützen, was ebenfalls zu Schwierigkeiten führen würde.

Der Erfindung liegt die Aufgabe zugrunde, eine Filmkartenkamera der eingangs genannten Art so auszubilden, daß sie trotz Anordnung mehrerer Entwicklungsstationen möglichst kompakt baut und ein möglichst geringes Kippmoment auf die sie führende Säule ausübt. Weiterhin soll ein mit der erfindungsgemäßen Filmkartenkamera durchführbares Verfahren zum Erstellen und Bedrucken von Duplikatfilmkarten aufgefunden werden.

Die erstgenannte Aufgabe wird erfindungsgemäß dadurch gelöst, daß das Kameragehäuse von oben gesehen T-förmig ausgebildet ist und in dem zur Säule führenden Gehäusebereich zur Säule hin hintereinander mehrere Entwicklungsstationen vorgesehen sind, daß in diesem zur Säule führenden Gehäusebereich desweiteren ein Querförderer zum Transport der Filmkarten zu den einzelnen Entwicklungsstationen und zur Rückführung in das vordere Kameragehäuse und von dort zu einem Auslaß vorgesehen ist, daß der vordere Kamerabereich quer zu den Entwicklungsstationen hintereinander und durch eine Transporteinrichtung miteinander verkettet den Filmkarteneinlaß und die Belichtungsstation aufweist und daß im Bereich der Belichtungsstation eine Übergabeeinrichtung zum Zuführen der Filmkarten zum Querförderer vorgesehen ist.

Dank dieser Ausbildung wird für die Entwicklungsstationen der Platz genutzt, der ohnehin wegen des erforderlichen Abstandes der Filmkartenkamera von ihrer Säule vorhanden ist. Dadurch kann die Kamera ausreichend klein ausgeführt werden, um zu keinen Problemen bei der Anordnung der die Vorlage beleuchtenden Lampen zu führen. Weiterhin verringern sich die durch das Gewicht der Entwicklungsstationen auf die Säule ausgeübten Momente, da ihr Abstand von der Säule geringer ist als bei der vorbekannten Kamera.

Die fertigen Filmkarten gelangen auf einfache Weise seitenrichtig zum Filmkartenauslaß, wenn der Querförderer ein Bandförderer ist, dessen Untertrum zum Zuführen der Filmkarten zu den einzelnen Entwicklungsstationen und dessen Obertrum zum Zurückführen der Filmkarten in das vordere Kameragehäuse vorgesehen ist. Durch diese Gestaltung kann man auf aufwendige Wendeeinrichtungen und Rückführmittel, wie sie beispielsweise in der DE-OS 33 29 806 beschrieben sind, verzichten.

Das Beschriften der Filmkarten kann ebenfalls in der Filmkartenkamera selbst erfolgen, ohne daß die erforderliche Beschriftungsstation zu einer unerwünschten Vergrößerung der Kamera führt, wenn im Bereich des Obertrums des Querförderers eine Beschriftungsstation für die Filmkarten vorgesehen ist. Da das Beschriften der Filmkarten erst nach dem Belichten und Entwickeln erfolgt, kann das Belichten einer Filmkarte unverzüglich nach dem Auflegen einer Vorlage erfolgen. Man braucht nicht wie bei den bisher bekannten Filmkartenkameras mit einem Druckwerk erst das relativ zeitaufwendige Bedrucken abzuwarten. Weiterhin kann man vor der Beschriftungsstation ein Puffer vorsehen, um durch längere Druckzeiten zu keiner Störung des Arbeitsablaufes zu kommen.

Mit der erfindungsgemäßen Filmkartenkamera können auch Duplikatkarten erzeugt werden, wenn im vorderen Gehäusebereich an der dem Filmkarteneinlaß gegenüberliegenden Stirnseite ein Masterkarteneinlaß und zwischen dem Masterkarteneinlaß und der Belichtungsstation eine Kontaktbelichtungsstation vorgesehen ist. Dadurch, daß die Entwicklungsstationen im rückwärtigen Gehäusebereich vorgesehen sind, verbleibt im vorderen Gehäusebereich ausreichend Platz für die Kontaktbelichtungsstation und den Masterkarteneinlaß.

Duplikatkarten müssen auf der anderen Seite bedruckt werden als die Originalkarten. Das könnte dadurch geschehen, daß man für beide Kartenarten einander gegenüberliegend jeweils ein Druckwerk vorsieht. Einfacher gestaltet sich jedoch die Gesamtanordnung, wenn gemäß einer vorteilhaften Ausgestaltung der Erfindung die Beschriftungsstation ausschließlich auf der Unterseite des Obertrums ein Druckwerk hat und vor der Beschriftungsstation eine Wendestation für die Filmkarten vorgesehen ist.

Das Einlesen der für die Beschriftung der Duplikatkarten erforderlichen Daten von der Musterfilmkarte kann in der Filmkartenkamera erfolgen, wenn im vorderen Kameragehäuse vor der Kontaktbelichtungsstation eine Lesestation für die beim Duplizieren von der Beschriftungsstation zu druckenden Daten vorgesehen ist.

Besonders einfach ist die Lesestation gestaltet, wenn sie zum Lesen eines Identifikationscodes auf dem Filmteil der jeweiligen Filmkarte ausgebildet ist und wenn die Beschriftungsstation von einem elektronischen Datenspeicher gesteuert ist, wobei die Zuordnung der Druckdaten aufgrund des Identifikationscodes erfolgt.

Wenn die erfindungsgemäße Filmkartenkamera wie zuvor erläutert mit einer Kontaktbelichtungsstation, einer Lesestation und einer Beschriftungsstation versehen ist, dann stellt sie eine Kombination einer Filmkartenkamera und eines Dupliziergerätes dar. Mit ihr können Sätze von Original- oder Duplikat-Silberfilmdatenkarten in schneller Folge erstellt werden, die maschinell optisch lesbare Zeichen als Kodierung und/oder als Beschriftung auf der ganzen Kartenfläche enthalten.

Die zweitgenannte Aufgabe, nämlich die Schaffung eines Verfahrens zum Erstellen und Bedrucken von Original- und Duplikatfilmkarten mit Silberfilm in einer Filmkartenkamera mit einer Beschriftungsstation, wird erfindungsgemäß dadurch gelöst, daß beim Erstellen der Originalkarte die zu druckenden Daten zunächst in einem elektronischen Datenspeicher unter jeweils einer der jeweiligen Filmkarte zugeordneten Adresse abgespeichert werden und beim Drucken der Filmkarte auf ihr jeweils ein der Adresse entsprechender Identifikationscode gedruckt wird und daß zum Drucken der Duplikatkarten mittels einer Lesestation der Identifikationscode gelesen und danach die Druckdaten zugeordnet werden. Nach diesem Verfahren werden beim Bedrucken einer Originalkarte die zu druckenden Daten aus dem Datenspeicher abgerufen. Wenn Duplikatkarten erstellt werden, wird der Text des Codes oder der Beschriftung der Originalkarte an der Lesestation abgelesen, so daß für die Druckstation beim Bedrucken der Duplikatkarte wiederum die zu druckenden Daten vom Datenspeicher abgerufen werden können.

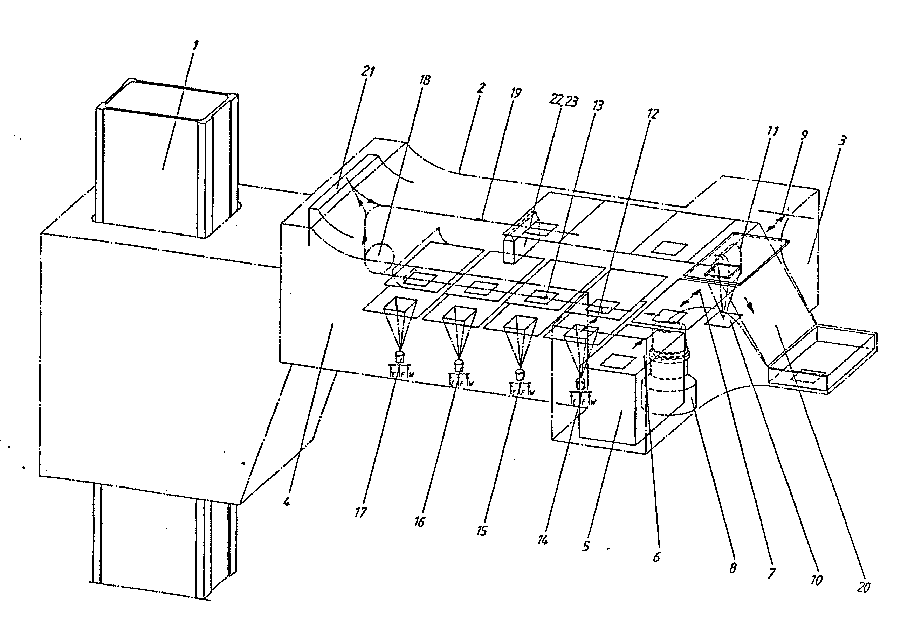

Die Erfindung läßt zahlreiche Ausführungsformen zu. Zur weiteren Verdeutlichung ihres Grundprinzips ist eine davon schematisch in der Zeichnung dargestellt und wird nachfolgend beschrieben.

In der Zeichnung ist eine Säule 1 dargestellt, auf der ein von oben gesehen T-förmiges Kameragehäuse 2 der erfindungsgemäßen Filmkartenkamera höhenverfahrbar angeordnet ist. Das Kameragehäuse 2 besteht aus einem vorderen Gehäusebereich 3 und einem rückwärtigen, zur Säule 1 führenden Gehäusebereich 4. An der linken Stirnseite des vorderen Gehäusebereiches 3 ist ein Filmkarteneinlaß 5 vorgesehen, in dem ein Stapel von Filmkarten 6 einsetzbar ist. Diese Filmkarten 6 werden von einer Transporteinrichtung 7 einzeln zu einer Belichtungsstation 8 transportiert. Auf der dem Filmkarteneinlaß 5 gegenüberliegenden Stirnseite des vorderen Gehäuseteiles 3 ist ein Masterkarteneinlaß 9 vorgesehen, von dem aus Masterkarten einer Kontaktbelichtungsstation 10 zuführbar sind. Vor dem Erreichen der Kontaktbelichtungsstation 10 fährt eine eingeschobene Masterkarte über eine Lesestation 11, wo der auf ihr gedruckte Text automatisch gelesen wird. Die Transporteinrichtung 7 vermag nach dem Kontaktbelichten die Masterkarte zurück zum Masterkartenauslaß 9 zu transportieren. Weiterhin können von der Transporteinrichtung 7 die belichteten Duplikatkarten zur Belichtungsstation 8 gefördert werden.

Von der Belichtungsstation 8 werden die belichteten Filmkarten 6 oder die Duplikatkarten mittels einer Übergabeeinrichtung einem Querförderer 12 im rückwärtigen Gehäusebereich 4 zugeführt. Der Querförderer 12 besteht aus einem umlaufenden Band, dessen Untertrum 13 die Filmkarten 6 vor vier hintereinander im rückwärtigen Gehäuseteil 4 vorgesehenen Entwicklungsstationen 14, 15, 16, 17 bewegen kann. Vor der gerade nicht belegten Entwicklungsstation 14, 15, 16 oder 17 wird die jeweilige Filmkarte 6 vom Untertrum 13 freigegeben und in die Entwicklungsstation 14 - 17 geschoben. Nach der Entwicklung wird sie vom Untertrum 13 wieder mitgeführt, gelangt nach Passieren einer hinteren Umlenkrolle 18 auf das Obertrum 19 des Querförderers 12 und dadurch wieder zurück zum vorderen Gehäusebereich 3, wo sich in Verlängerung des Querförderers 12 ein Filmkartenauslaß 20 befindet.

Im Bereich der Umlenkrolle 18 ist desweiteren eine Wendestation 21 vorgesehen, die es ermöglicht, Karten wahlweise mit der einen oder anderen Seite nach oben einer unter dem Obertrum 19 vorgesehenen Beschriftungsstation 22 mit einem Druckwerk 23 zuzuführen.

Wenn mit der beschriebenen Filmkartenkamera Duplikatkarten erzeugt werden sollen, dann wird mit der Lesestation 11 der Identitätscode auf der Masterkarte gelesen und danach aus einem elektronischen Speicher die auf der entsprechenden Duplikatkarte zu druckenden Daten abgerufen. Die Lesestation 11 braucht deshalb nicht den in OCR-Schrift auf der Masterkarte gedruckten Text zu lesen.

Auflistung der verwendeten Bezugszeichen

1 Säule
2 Kameragehäuse
3 vorderer Gehäusebereich
4 rückwärtiger Gehäusebereich
5 Filmkarteneinlaß
6 Filmkarte
7 Transporteinrichtung
8 Belichtungsstation
9 Masterkarteneinlaß
10 Kontaktbelichtungsstation
11 Lesestation
12 Querförderer
13 Untertrum
14 Entwicklungsstation
15 Entwicklungsstation
16 Entwicklungsstation
17 Entwicklungsstation
18 Umlenkrolle
19 Obertrum
20 Filmkartenauslaß
21 Wendestation
22 Beschriftungsstation
23 Druckwerk

**Ansprüche**

1. Filmkartenkamera mit einem von einem Ausleger an einer senkrechten Säule (1) gehaltenen Kameragehäuse (2), welche einen Filmkarteneinlaß (5), eine Belichtungsstation (8) und eine Entwicklungsstation (14-17) aufweist, dadurch gekennzeichnet, daß das Kameragehäuse (2) von oben gesehen T-förmig ausgebildet ist und in dem zur Säule (1) führenden Gehäusebereich (4) zur Säule (1) hin hintereinander mehrere Entwicklungsstationen (14 - 17) vorgesehen sind, daß in diesem zur Säule (1) führenden Gehäusebereich (4) desweiteren ein Querförderer (12) zum Transport der Filmkarten (6) zu den einzelnen Entwicklungsstationen (14 - 17) und zur Rückführung in das vordere Kameragehäuse (3) und von dort zu einem Filmkartenauslaß (20) vorgesehen ist, daß der vordere Kamerabereich (3) quer zu den Entwicklungsstationen (14 - 17) hintereinander und durch eine Transporteinrichtung (7) miteinander verkettet den Filmkarteneinlaß (5) und die Belichtungsstation (8) aufweist und daß im Bereich der Belichtungsstation (8) eine Übergabeeinrichtung zum Zuführen der Filmkarten (6) zum Querförderer (12) vorgesehen ist.

2. Filmkartenkamera nach Anspruch 1, dadurch gekennzeichnet, daß der Querförderer (12) ein Bandförderer ist, dessen Untertrum (13) zum Zuführen der Filmkarten (6) zu den einzelnen Entwicklungsstationen (14 - 17) und dessen Obertrum (19) zum Zurückführen der Filmkarten (6) in das vordere Kameragehäuse (3) vorgesehen ist.

3. Filmkartenkamera nach den Ansprüchen 1 oder 2, dadurch gekennzeichnet, daß im Bereich des Obertrums (19) des Querförderers (12) eine Beschriftungsstation (22) für die Filmkarten (6) vorgesehen ist.

4. Filmkartenkamera nach zumindest einem der vorangehenden Ansprüche, dadurch gekennzeichnet, daß im vorderen Gehäusebereich (3) an der dem Filmkarteneinlaß (5) gegenüberliegenden Stirnseite ein Masterkarteneinlaß (9) und zwischen dem Masterkarteneinlaß (9) und der Belichtungsstation (8) eine Kontaktbelichtungsstation (10) vorgesehen ist.

5. Filmkartenkamera nach zumindest einem der vorangehenden Ansprüche, dadurch gekennzeichnet, daß die Beschriftungsstation (22) ausschließlich auf der Unterseite des Obertrums (19) ein Druckwerk (23) hat und vor der Beschriftungsstation (22) eine Wendestation (21) für die Filmkarten (6) vorgesehen ist.

6. Filmkartenkamera nach zumindest einem der vorangehenden Ansprüche, dadurch gekennzeichnet, daß im vorderen Kameragehäuse (3) vor der Kontaktbelichtungsstation (10) eine Lesestation (11) für die beim Duplizieren von der Beschriftungsstation (22) zu druckenden Daten vorgesehen ist.

7. Filmkartenkamera nach Anspruch 6, dadurch gkennzeichnet, daß die Lesestation (11) zum Lesen eines Identifikationscodes auf dem Filmteil der jeweiligen Filmkarte (6) ausgebildet ist und daß die Beschriftungsstation (22) von einem elektronischen Datenspeicher gesteuert ist, wobei die Zuordnung der Druckdaten aufgrund des Identifikationscodes erfolgt.

8. Verfahren zum Erstellen und Bedrucken von Original-und Duplikatfilmkarten mit Silerfilm in einer Filmkartenkamera mit einer Beschriftungsstation, dadurch gekennzeichnet, daß beim Erstellen der Originalkarte die zu druckenden Daten zunächst in einem elektronischen Datenspeicher unter jeweils einer der jeweiligen Filmkarte zugeordneten Adresse abgespeichert werden und beim Drucken der Filmkarte auf ihr jeweils ein der Adresse entsprechender Identifikationscode gedruckt wird und daß zum Drucken der Duplikatkarten mittels einer Lesestation der Identifikationscode gelesen und danach die Druckdaten zugeordnet werden.